# EUROPÄISCHE PATENTSCHRIFT

(11) **EP 3 369 497 B1**
(45) Veröffentlichungstag und Bekanntmachung des Hinweises auf die Patenterteilung: **20.03.2024**
(21) Anmeldenummer: 17180097.2
(22) Anmeldetag: 06.07.2017
(51) Int. Cl.: B22F 3/105, B29C 64/393, B29C 64/364, B29C 64/268, B29C 64/153, B33Y 40/00, B33Y 50/02, B33Y 30/00, B33Y 10/00, B22F 10/28, B22F 10/368, B22F 12/90

(54) **VORRICHTUNG UND VERFAHREN ZUR ADDITIVEN HERSTELLUNG DREIDIMENSIONALER OBJEKTE**
APPARATUS AND METHOD FOR THE ADDITIVE PRODUCTION OF THREE-DIMENSIONAL OBJECTS
DISPOSITIF ET PROCÉDÉ DE FABRICATION ADDITIVE D'OBJETS TRIDIMENSIONNELS

(30) Priorität: 03.03.2017 DE 102017104506
(43) Veröffentlichungstag der Anmeldung: 05.09.2018
(73) Patentinhaber: Concept Laser GmbH, 96215 Lichtenfels (DE)
(72) Erfinder: Hetzel, Ralf, 96231 Bad Staffelstein (DE); Traut, Tanja, 96479 Weitramsdorf (DE); Schumann, Philipp, 96274 Itzgrund - Schottenstein (DE)
(74) Vertreter: Hafner & Kohl PartmbB

(56) Entgegenhaltungen:
- US-A1- 2010 111 744
- US-A1- 2016 074 965
- US-A1- 2016 179 064
- US-A1- 2016 271 884
- US-A1- 2016 326 880
- US-A1- 2017 014 906

## Beschreibung

Die Erfindung betrifft eine Vorrichtung zur additiven Herstellung dreidimensionaler Objekte durch sukzessive schichtweise selektive Belichtung und damit einhergehende sukzessive schichtweise selektive Verfestigung von Baumaterialschichten aus einem vermittels eines Energiestrahls verfestigbaren Baumaterial, umfassend eine Belichtungseinrichtung, welche zur Erzeugung eines Energiestrahls zur sukzessiven schichtweisen selektiven Belichtung und damit einhergehenden sukzessiven schichtweisen selektiven Verfestigung von Baumaterialschichten aus einem vermittels des Energiestrahls verfestigbaren Baumaterial eingerichtet ist, mit den weiteren Merkmalen des Oberbegriffs des Anspruchs 1.

Eine derartige Vorrichtung zur additiven Herstellung dreidimensionaler Objekte ist an und für sich bekannt. Vermittels einer entsprechenden Vorrichtung werden herzustellende dreidimensionale Objekte durch sukzessive schichtweise selektive Belichtung und damit einhergehende sukzessive schichtweise selektive Verfestigung von Baumaterialschichten in den dem schichtbezogenen Querschnitt des herzustellenden Objekts entsprechenden Bereichen aus einem vermittels eines Energiestrahls verfestigbaren Baumaterial additiv aufgebaut.

Weiter ist es bekannt, der Vorrichtung eine Temperaturermittlungseinrichtung zuzuordnen, welche zur Ermittlung der Temperatur verschiedener Komponenten der Vorrichtung, eingerichtet ist.

Die bekannten Messeinrichtungen sind nicht geeignet, Informationen über die Temperatur und damit Aufschlüsse über die Ausbildung eines bestimmten Gefüges in dem durch selektive Verfestigung von Baumaterial zu generierenden dreidimensionalen Objekt zu gewinnen. Bis dato ist es daher auch nicht möglich, anhand derartiger Informationen in den Bau- bzw. Entstehungsprozess des aus Baumaterial zu verfestigenden dreidimensionalen Objekts vorteilhaft einzugreifen.

Aus dem Dokument US 2016 074 965 A1 ist eine Vorrichtung zur additiven Herstellung dreidimensionaler Objekte in einem Pulverbett bekannt, bei dem Induktionsspulen zum induktiven Heizen des Pulverbetts positioniert werden können. Aus dem Dokument US 2016 179 064 A1 ist ebenfalls eine additive Herstellungsvorrichtung für einen Pulverbettprozess bekannt, wobei mittels Sensoren Eigenschaften des Betriebs der additiven Herstellungsvorrichtung erfasst werden können.

Der Erfindung liegt damit die Aufgabe zugrunde, eine gegenüber dem Stand der Technik verbesserte Vorrichtung zur additiven Herstellung dreidimensionaler Objekte anzugeben, mit Hilfe deren bereits während des Bauprozesses Daten ermittelt werden können, auf denen basierend Parameter des Bauprozesses angepasst werden können.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des jeweils additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als Vorrichtung zur Durchführung selektiver Elektronenstrahlschmelzverfahren (SEBS-Verfahren), ausgebildet ist.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung.

Die Beschichtungseinrichtung ist zur Ausbildung selektiv zu belichtender bzw. selektiv zu verfestigender Baumaterialschichten in einer Bauebene bzw. einem Baufeld der Vorrichtung eingerichtet, in der bzw. in dem die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt.

Die Belichtungseinrichtung ist zur Erzeugung eines Energiestrahls, d. h. insbesondere eines Laserstrahls, zur sukzessiven schichtweisen selektiven Belichtung und damit einhergehenden sukzessiven schichtweisen selektiven Verfestigung von Baumaterialschichten aus einem vermittels des Energiestrahls verfestigbaren Baumaterial eingerichtet. Die Belichtungseinrichtung kann eine Energiestrahlerzeugungseinrichtung, welche zur tatsächlichen Erzeugung des Energiestrahls eingerichtet ist, und eine Strahlablenkeinrichtung (Scannereinrichtung), welche zur Ablenkung des Energiestrahls auf eine selektiv zu verfestigende Baumaterialschicht eingerichtet ist, als jeweilige Bestandteile der Belichtungseinrichtung umfassen.

Die Vorrichtung umfasst eine Messeinrichtung. Die Messeinrichtung ist zur Messung der Temperatur mindestens zweier Messpunkte innerhalb der Bauebene, in welcher die sukzessive schichtweise selektive Verfestigung des Baumaterials erfolgt, eingerichtet. Vermittels der Messeinrichtung, welche als eine Thermografie-Kamera ausgebildet ist bzw. wenigstens eine solche umfasst, lassen sich sonach Messpunkte innerhalb einer selektiv zu verfestigenden bzw. verfestigten Baumaterialschicht erfassen. Vermittels der Messeinrichtung ermittelte bzw. gemessene Messpunkte sind wenigstens einem zumindest teilweise aus verfestigtem Baumaterial gebildeten dreidimensionalen Objekt bzw. wenigstens einem im Rahmen der additiven Herstellung eines additiv herzustellenden Objekts entstehenden Objektabschnitt zugeordnet. Die Messeinrichtung ist also insbesondere eingerichtet, die Temperatur wenigstens eines additiv herzustellenden Objekts bzw. wenigstens eines im Rahmen der additiven Herstellung eines additiv herzustellenden Objekts entstehenden Objektabschnitts zu ermitteln bzw. zu messen. Derart lassen sich Aufschlüsse über verschiedene, gegebenenfalls im Rahmen des Bauprozesses veränderliche, Parameter, wie z. B. Gefügeparameter, des Objekts bzw. Objektabschnitts erhalten.

Die Vorrichtung kann verschiedene, insbesondere bodenseitig, an eine inertisierbare Prozesskammer der Vorrichtung andockbare Pulvermodule umfassen. Bei einem entsprechenden Pulvermodul kann es sich z. B. um ein Baumodul handeln, in welchem der eigentliche additive Aufbau des oder der additiv herzustellenden Objekte erfolgt. Der mindestens eine Messpunkt kann sich in der Bauebene befinden. Die Bauebene ist hier an ein, insbesondere bodenseitig, an die Prozesskammer der Vorrichtung angedocktes Baumodul der Vorrichtung angrenzend angeordnet oder ausgebildet.

Um ein möglichst umfassendes Bild über die sich im Rahmen des Bauprozesses gegebenenfalls veränderlichen Objektparameter zu erhalten, können einem dreidimensionalen Objekt auch mehrere Messpunkte zugeordnet sein. Mithin wird die Temperatur des Objekts örtlich und zeitlich mehrfach, d. h. an unterschiedlichen Orten des Objekts und zu unterschiedlichen Zeiten, gemessen.

Der Vorrichtung ist eine Anzeigeeinrichtung zugeordnet, die eingerichtet ist, eine an dem mindestens einen Messpunkt gemessene Temperatur anzuzeigen. Die Anzeigeeinrichtung kann an einem Gehäuseabschnitt der Vorrichtung angeordnet oder ausgebildet sein. Die Anzeigeeinrichtung kann einen Bestandteil einer vorrichtungsseitigen Benutzerschnittstelle bilden. Bei der Anzeigeeinrichtung kann es sich um ein Display, insbesondere um ein Touch-Display, handeln. Die vermittels der Messeinrichtung gemessenen Daten können vermittels der Anzeigeeinrichtung in vielerlei alphanumerischen und/oder graphischen Anzeigemöglichkeiten dargestellt werden.

Die Messeinrichtung umfasst typischerweise eine Datentransfereinheit und eine hard- und/oder softwaremäßig implementierte Steuereinheit zur Regelung einer Temperaturregelungseinrichtung respektive ist der Messeinrichtung eine entsprechende Datentransfereinheit und eine entsprechende Steuereinheit zugeordnet. Mithin können vermittels der Messeinrichtung gemessene Daten über die Datentransfereinheit auch an einen externen Kommunikationspartner, wie z. B. an eine externe Überwachungseinrichtung zur Überwachung eines Bauprozesses, übermittelt werden.

Die Temperaturregelungseinrichtung ist derart ausgebildet, dass die Temperatur an einem oder mehreren Mess- bzw. Raumpunkten innerhalb der Bauebene in Abhängigkeit von der oder den vermittels der Messeinrichtung gemessenen/ermittelten Temperatur(en) verändert werden kann. Die Temperaturregelungseinrichtung ist hierfür zur Erzeugung von Steuerbefehlen an vorrichtungsseitige bzw. baumodulseitige Temperiereinrichtungen, d. h. insbesondere Heizeinrichtungen, eingerichtet, welche auf Grundlage der Steuerbefehle in entsprechende Betriebszustände genommen werden, sodass eine gezielte Regelung der Temperatur des Baumaterials bzw. des Objekts möglich ist.

Die Erfindung betrifft ferner ein Verfahren zur additiven Herstellung dreidimensionaler Objekte, umfassend die Verfahrensschritte:
- Bereitstellen einer zuvor beschriebenen Vorrichtung,
- Mehrfaches zeitliches und örtliches Messen der Temperatur wenigstens zweier Messpunkten, wobei die Messpunkte wenigstens zwei zumindest teilweise aus verfestigtem Baumaterial gebildeten dreidimensionalen Objekten oder wenigstens zwei im Rahmen der additiven Herstellung eines additiv herzustellenden Objekts entstehenden Objektabschnitten zugeordnet sind und Anzeigen der gemessenen Temperaturen und örtlicher und/oder zeitlicher Temperaturgradienten der Objekte,
- Steuerung der Temperatur an den wenigstens zwei Messpunkten in Abhängigkeit von den ermittelten Temperaturen. Sämtliche Ausführungen im Zusammenhang mit der Vorrichtung gelten analog für das bzw. die Verfahren.

Die Erfindung ist anhand von Ausführungsbeispielen in den Zeichnungsfiguren näher erläutert. Dabei zeigt:
- Fig. 1: eine Prinzipdarstellung einer Vorrichtung gemäß einem Ausführungsbeispiel;
- Fig. 2: eine Prinzipdarstellung einer Anzeige einer Anzeigeeinrichtung gemäß einem Ausführungsbeispiel.

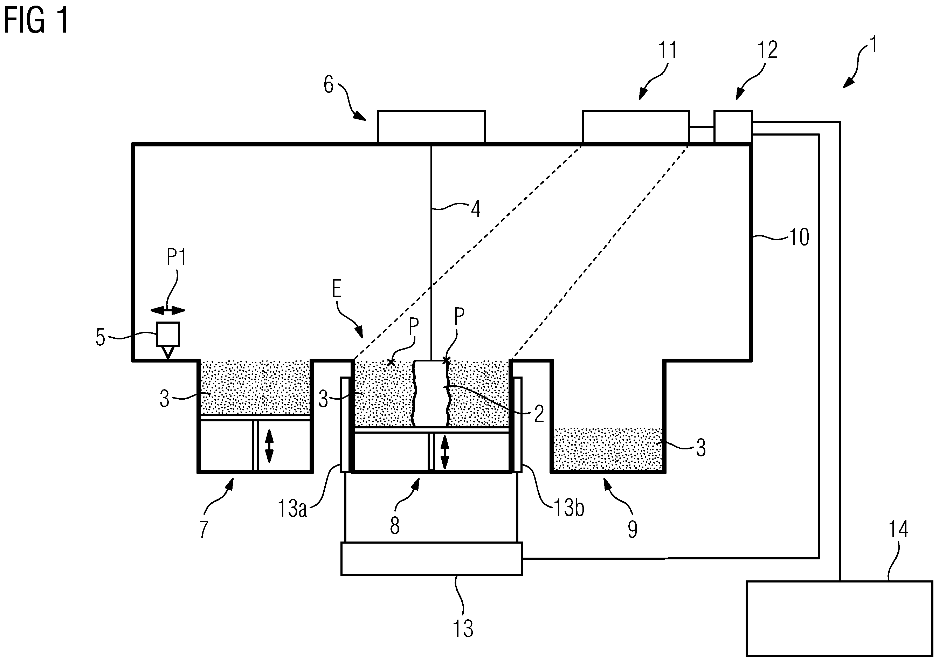

Fig. 1 zeigt eine Prinzipdarstellung einer Vorrichtung 1 gemäß einem Ausführungsbeispiel. Die Vorrichtung 1 dient im Allgemeinen der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Energiestrahls 4, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann z. B. als Laser-CUSING^{®}-Vorrichtung, d. h. als Vorrichtung zur Durchführung selektiver Laserschmelzverfahren (SLM-Verfahren), ausgebildet sein.

Die Vorrichtung 1 umfasst die zur Durchführung additiver Bauvorgänge erforderlichen Funktionskomponenten; in Fig. 1 ist beispielsweise eine Beschichtungseinrichtung 5 und eine Belichtungseinrichtung 6 gezeigt.

Die Beschichtungseinrichtung 5 ist zur Ausbildung selektiv zu belichtender bzw. selektiv zu verfestigender Baumaterialschichten in einer Bauebene E der Vorrichtung 1 eingerichtet und umfasst hierzu ein - wie durch den Doppelpfeil P1 angedeutet - relativ zu der Bauebene E der Vorrichtung 1 bewegbar gelagertes, insbesondere klingenartiges bzw. -förmiges, Beschichtungselement (nicht näher bezeichnet).

Die Belichtungseinrichtung 6 ist zur Erzeugung eines Energiestrahls 4 zur selektiven Belichtung selektiv zu verfestigender Baumaterialschichten in der Bauebene E der Vorrichtung 1 eingerichtet und umfasst hierfür typischerweise eine Strahlerzeugungseinrichtung (nicht gezeigt), welche zur Erzeugung des Energiestrahls 4 eingerichtet ist, gegebenenfalls eine auch als Scannereinrichtung zu bezeichnende Strahlablenkeinrichtung (nicht gezeigt), welche zur Ablenkung des von der Strahlerzeugungseinrichtung erzeugten Energiestrahls 4 z. B. auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc. (nicht gezeigt).

In Fig. 1 ist ferner ein Dosiermodul 7, ein Baumodul 8 und ein Überlaufmodul 9 dargestellt, welche an einen unteren Bereich einer inertisierbaren Prozesskammer 10 der Vorrichtung 1 angedockt sind. Die genannten Module 7 - 9 können auch einen unteren Bereich der Prozesskammer 10 der Vorrichtung 1 bilden.

Die Vorrichtung 1 umfasst ferner eine Messeinrichtung 11 in Form einer Thermographie-Kamera, welche zur Messung der Temperatur an einem oder mehreren Messpunkten P ermittelt werden kann. Derartige Messpunkte P - in Fig. 1 sind rein beispielhaft zwei Messpunkte P dargestellt - können sich in der Bauebene E bzw. innerhalb des Baumoduls 8 auf der Oberfläche des bereits (teilweise) ausgebildeten dreidimensionalen Objekts 2. Selbstverständlich können sich Messpunkte P auch auf mehreren dreidimensionalen Objekten 2 befinden.

Dargestellt ist weiter eine Temperaturregeleinrichtung 12 sowie eine dieser zugeordnete Temperier- bzw. Heizeinrichtung 13, welche beispielhaft zwei Temperier- bzw. Heizelemente 13a, 13b zum Heizen und/oder Kühlen des Baumoduls 8 bzw. des in diesem befindlichen Baumaterials 3 umfasst.

Die Temperaturregeleinrichtung 12 bildet einen Bestandteil einer Steuereinheit (nicht gezeigt). Die Steuereinheit ist dafür ausgebildet, die von der Messeinrichtung ermittelte Daten und gegebenenfalls weitere Informationen auszuwerten und Steuersignale an weiterte bauliche Funktionskomponenten der Vorrichtung 1 auszugeben. Die Steuereinrichtung ist eingerichtet, anhand der ermittelten Daten Steuersignale an die Temperaturregeleinrichtung 12 an die Beschichtungseinrichtung 5 oder an die Strahlerzeugungseinrichtung auszugeben 6.

Dargestellt ist ferner eine Anzeigeeinrichtung 14, beispielsweise ein Display, mit Hilfe derer die ermittelten Temperaturen in einer Zuordnung zu dem entsprechenden dreidimensionalen Objekt 2 dargestellt werden können und weitere aus diesen Werten abgeleitete Informationen, wie beispielsweise der Wärmegradient. Die Darstellungen der Anzeigeeinrichtung 14 können in verschiedenen von einem Benutzer wählbaren Darstellmöglichkeiten angezeigt werden. Die Anzeigeeinrichtung 14 kann auch als Teil der Messeinrichtung 11 ausgebildet sein.

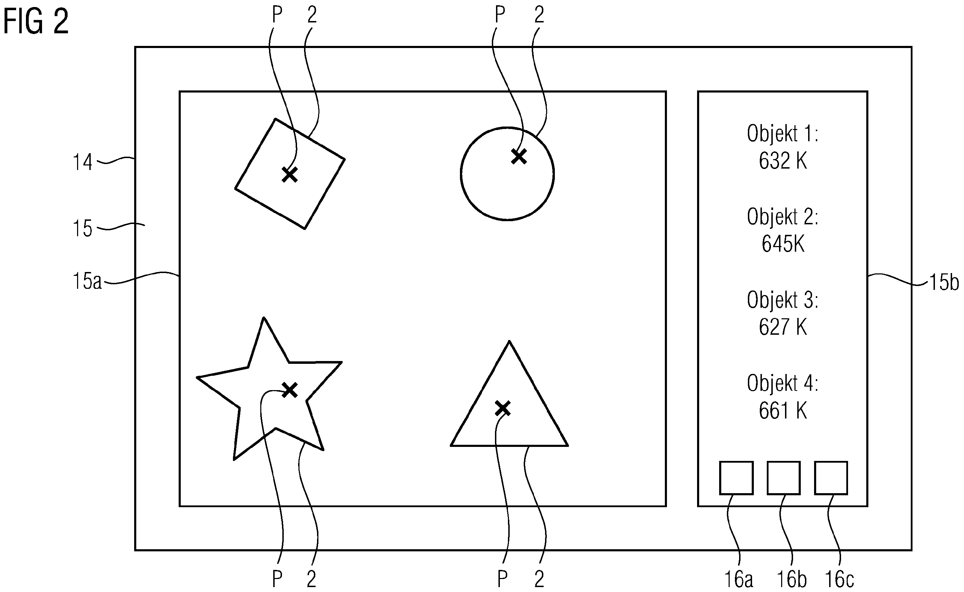

Fig. 2 zeigt eine Prinzipdarstellung einer Anzeige einer Anzeigeeinrichtung 14 gemäß einem Ausführungsbeispiel.

Ersichtlich ist auf einer Anzeigefläche 15 der Anzeigeeinrichtung 14 jedem Messpunkt P, zu dem eine Temperatur ermittelt wurde, graphisch das dreidimensionale Objekt 2 zugeordnet. Dabei kann auch dessen Formbildung über Ort und Zeit dargestellt werden.

In dem gezeigten Ausführungsbeispiel wird die Temperatur an mehreren, nämlich beispielhaft vier Messpunkten P, gemessen, wobei jeder der vier Messpunkte P einem bestimmte dreidimensionalen Objekt 2 bzw. Bauteil zugeordnet ist. Nicht dargestellt ist ein weiteres Ausführungsbeispiel, in welchem mehrere Messpunkte P demselben dreidimensionalen Objekt 2 bzw. Bauteil zugeordnet sind.

Ersichtlich ist die Anzeigefläche 15 in zwei Anzeigeflächenbereiche 15a, 15b unterteilt. In einem ersten Anzeigeflächenbereich 15a sind die Objekte 2 und die Messpunkte P dargestellt. In einem zweiten Anzeigeflächenbereich 15b sind die den jeweiligen Objekten 2 zugeordneten Temperaturen (Messwerte), hier beispielhaft als Absoluttemperaturen in Kelvin angegeben, dargestellt.

In dem zweiten Anzeigeflächenbereich 15b befinden sich zudem von einem Benutzer auswählbare Menüpunkte 16a-c, über welche ein Benutzer eine bestimmte Anzeige wählen kann. Durch Auswahl des Menüpunkts 16a ist beispielsweise eine tabellenartige Anzeige der Messwerte, durch Auswahl des Menüpunkts 16b beispielsweise eine diagrammartige Anzeige der Messwerte und durch Auswahl des Menüpunkts 16c beispielsweise eine Anzeige eines örtlichen und/oder zeitlichen Temperaturgradienten, z. B. der Objekte 2, möglich.

## Patentansprüche

1. Vorrichtung (1) zur additiven Herstellung dreidimensionaler Objekte (2) durch sukzessive schichtweise selektive Belichtung und damit einhergehende sukzessive schichtweise selektive Verfestigung von Baumaterialschichten aus einem vermittels eines Energiestrahls (4) verfestigbaren Baumaterial (3), umfassend:
- eine Belichtungseinrichtung (6), welche zur Erzeugung eines Energiestrahls (4) zur sukzessiven schichtweisen selektiven Belichtung und damit einhergehenden sukzessiven schichtweisen selektiven Verfestigung von Baumaterialschichten aus einem vermittels des Energiestrahls (4) verfestigbaren Baumaterial (3) eingerichtet ist, und
- eine als Themografie-Kamera ausgebildete Messeinrichtung (11) zur Messung einer Temperatur,
- eine Temperaturregeleinrichtung (12) welche Bestandteil einer Steuereinheit bildet, wobei die Temperaturregeleinrichtung (12) eine Temperier- oder Heizeinrichtung (13) umfasst, **dadurch gekennzeichnet, dass** die Steuereinheit dazu ausgebildet ist, mittels der Messeinrichtung (11), an mindestens zwei Messpunkten (P) eine Temperatur örtlich und zeitlich mehrfach zu messen, wobei die Messpunkte (P) wenigstens zwei zumindest teilweise aus verfestigtem Baumaterial (3) gebildeten dreidimensionalen Objekten (2) oder wenigstens zwei im Rahmen der additiven Herstellung eines additiv herzustellenden Objekts (2) entstehenden Objektabschnitten zugeordnet sind, wobei die Steuereinheit dazu ausgebildet ist, eine an den mindestens zwei Messpunkten (P) gemessene Temperatur und örtliche und/oder zeitliche Temperaturgradienten der Objekte (2) auf einer der Vorrichtung (1) zugeordneten Anzeigeeinrichtung (14) anzuzeigen, wobei die Steuereinheit zur Regelung der Temperaturregelungseinrichtung (12) derart ausgebildet ist, dass die Temperatur an einem oder mehreren Mess- oder Raumpunkten in Abhängigkeit von den vermittels der Messeinrichtung (11) gemessenen/ermittelten Temperaturen verändert werden kann.

2. Vorrichtung nach Anspruch 1, **dadurch gekennzeichnet, dass** sich wenigstens ein Messpunkt (P) in einer Bauebene (E) befindet, die an ein, insbesondere bodenseitig, an eine Prozesskammer (10) der Vorrichtung (1) angedocktes Baumodul (8) der Vorrichtung (1) angrenzend ausgebildet ist.

3. Vorrichtung nach einem der vorhergehenden Ansprüche, **dadurch gekennzeichnet, dass** einem dreidimensionalen Objekt (2) mehrere Messpunkte (P) zugeordnet sind.

4. Verfahren zur additiven Herstellung dreidimensionaler Objekte (2), **gekennzeichnet durch** die Verfahrensschritte:
- Bereitstellen einer Vorrichtung (1) nach einem der vorhergehenden Ansprüche,
- Mehrfaches zeitliches und örtliches Messen der Temperatur wenigstens zweier Messpunkten (P), wobei die Messpunkte (P) wenigstens zwei zumindest teilweise aus verfestigtem Baumaterial (3) gebildeten dreidimensionalen Objekten (2) oder wenigstens zwei im Rahmen der additiven Herstellung eines additiv herzustellenden Objekts (2) entstehenden Objektabschnitten zugeordnet sind und Anzeigen der gemessenen Temperaturen und örtlicher und/oder zeitlicher Temperaturgradienten der Objekte (2),
- Steuerung der Temperatur an den wenigstens zwei Messpunkten (P) in Abhängigkeit von den ermittelten Temperaturen.

## Claims

1. Apparatus (1) for the additive production of three-dimensional objects (2) by successive layer-by-layer selective exposure and associated successive layer-by-layer selective solidification of building material layers from an energy beam (4) solidifiable building material (3), comprising:
- an exposure device (6) which is set up for the generation of an energy beam (4) for successive layer-wise selective exposure and associated successive layer-wise selective solidification of building material layers from a means of energy beam (4) solidifying building material (3), and
- a measuring device designed as a themography camera (11) for measuring a temperature,
a temperature control device (12) which forms part of a control unit, wherein the temperature control device (12) comprises a temperature control or heating device (13), **characterised in that** the control unit is designed to measure by means of the measuring device (11), at least two measuring points (P) a temperature locally and temporally multiple times, wherein the measuring points (P) at least two at least partially formed of solidified building material (3) three-dimensional objects (2) or at least two resulting in the additive production of an additively produced object (2) are assigned, wherein the control unit is designed to indicate a temperature measured at the at least two measuring points (P)and local and/or temporal temperature gradients of the objects (2) on one of the device (1) associated display device (14), wherein the control unit for controlling the temperature control device (12) is designed such that the temperature at one or more measuring or room points can be changed depending on the measured/average temperatures measured by the measuring device (11).

2. Device according to claim 1, **characterised in that** at least one measuring point (P) is located in a construction plane (E), which is formed at a, in particular ground side, to a process chamber (10) of the device (1) docked module (8) of the device (1) adjacent.

3. Device according to one of the preceding claims, **characterised in that** a three-dimensional object (2) multiple measuring points (P) are assigned.

4. Method for additive manufacturing of three-dimensional objects (2), **characterised by** the process steps:
providing a device (1) according to one of the preceding claims,
multiple temporal and local measurement of the temperature of at least two measuring points (P), wherein the measuring points (P) are assigned at least two three-dimensional objects (2) formed at least partially from solidified building material (3) or at least two object sections resulting in the additive production of an additively produced object (2) and displaying the measured temperatures and thelocal and/or temporal temperature gradients of the objects (2),
controlling of the temperature at the at least two measuring points (P) depending on the determined temperatures.

## Revendications

1. Dispositif (1) pour la fabrication additive d'objets tridimensionnels (2) par exposition sélective par couche successive et solidification sélective successivement par couche des couches de matériaux de construction à partir d'un faisceau d'énergie (4) matériaux de construction solidifiables (3), comprenant:
- un dispositif d'exposition (6) conçu pour produire un faisceau d'énergie (4) pour l'exposition sélective successive par couche et la solidification sélective successive par couche des couches de matériaux de construction à partir d'un matériau de construction solidifiable (3) au moyen du faisceau d'énergie (4); et
- un dispositif de mesure formé en tant que caméra de thémographie (11) pour mesurer la température;
un régulateur de température (12) qui fait partie d'une unité de commande, dans lequel le régulateur de température (12) comprend un dispositif de thermorégulation ou de chauffage (13), **caractérisé en ce que** l'unité de commande est conçue pour mesurer à plusieurs reprises, au moyen de l'appareil de mesure (11), une température à au moins deux points de mesure (P) à au moins deux points de mesure (P) à plusieurs reprises, les points de mesure (P) étant au moins deux objets tridimensionnels formés au moins partiellement à partir de matériaux de construction solidifiés (3) ou au moins deux sections d'objets résultant de la fabrication additive (2) d'un objet additive (2); lorsque l'unité de commande est conçue pour indiquer une température mesurée à au moins deux points de mesure (P)et des gradients de température locaux et/ou temporels des objets (2) sur un indicateur associé à l'appareil (1) (14), l'unité de commande étant conçue pour contrôler le régulateur de température (12) de telle sorte que la température à un ou plusieurs points de mesure ou de pièce puisse être modifiée en fonction des températures mesurées/moyennes de l'instrument de mesure (11).

2. Dispositif selon la revendication 1, **caractérisé en ce qu'**au moins un point de mesure (P) se trouve dans un plan de construction (E) de formation adjacente à une chambre de traitement (10) du dispositif (1), en particulier au sol, au module de construction (8) du dispositif (1).

3. Dispositif selon l'une des revendications précédentes, **caractérisé en ce que** plusieurs points de mesure (P) sont attribués à un objet tridimensionnel (2).

4. Procédés de fabrication additive d'objets tridimensionnels (2), **caractérisés par** les étapes de la procédure:
fournir un dispositif (1) selon l'une des revendications précédentes,
mesure multiple dans le temps et localement de la température d'au moins deux points de mesure (P), où les points de mesure (P) sont attribués à au moins deux objets tridimensionnels formés au moins partiellement à partir de matériaux de construction solidifiés (3) ou au moins deux sections d'objets résultant de la fabrication additive d'un objet (2) et indiquant les températures mesurées et les gradients de température locaux et/ou temporels des objets (2),
contrôle de la température à au moins deux points de mesure (P) en fonction des températures déterminées.
